Europäisches Patentamt

European Patent Office

Office européen des brevets

(19)

(11) Numéro de publication: **0 360 713**
**A1**

(12)

# DEMANDE DE BREVET EUROPEEN

(21) Numéro de dépôt: **89420360.3**

(22) Date de dépôt: **21.09.89**

(51) Int. Cl.⁵: **B 23 B 51/10**

(30) Priorité: **23.09.88 FR 8812866**

(43) Date de publication de la demande:
**28.03.90 Bulletin 90/13**

(84) Etats contractants désignés:
**BE CH DE GB LI LU**

(71) Demandeur: **Cabanne, Jean**
**22, rue des Allières**
**F-43110 Aurec sur Loire (Haute Loire) (FR)**

(72) Inventeur: **Cabanne, Jean**
**22, rue des Allières**
**F-43110 Aurec sur Loire (Haute Loire) (FR)**

(74) Mandataire: **Perrier, Jean-Pierre et al**
**Cabinet GERMAIN & MAUREAU 12 rue de la République**
**F-42000 St-Etienne (FR)**

(54) **Outil pour l'usinage de logements pour tête de vis.**

(57) Cet outil est du type comportant, au moins deux goujures en hélice délimitant des lèvres avec arêtes de coupe hélicoïdales allant de sa pointe à son corps.

Il est muni, coaxialement à son axe de rotation et à partir de sa pointe, d'au moins un cône 2 avec arêtes de coupe formant un angle de 118 °, suivi par une partie tronconique 3, avec arêtes de coupe ayant un angle au sommet de valeur comprise entre 60 et 90 °, elle-même prolongée par une portée cylindrique 12, de plus grand diamètre qu'elle, comportant des arêtes de coupe au moins dans sa face en bout 14.

FIG. 2

EP 0 360 713 A1

Bundesdruckerei Berlin

**Description**

## Outil pour l'usinage de logements pour tête de vis.

Traditionnellement, les logements pour tête de vis sont réalisés, après perçage du trou de passage de la tige, par des fraises à chambrer, ou à lamer, comportant un pilote de centrage de positionnement de la fraise par engagement dans le trou déjà réalisé. Il est ensuite procédé à l'usinage du chanfrein de l'alésage pour la tête puis, pour les logements de tête de vis cylindrique, à la réalisation d'un autre chanfrein entre le fond du logement et l'alésage pour la tige. Ces diverses phases exigent chacune un outil particulier et, en conséquence, exigent du temps.

Par ailleurs, les trous de passage pour les tiges de vis pouvant avoir, pour chaque diamètre nominal de la tige, plusieurs diamètres selon le jeu axial désiré et la qualité de l'assemblage, il est nécessaire de posséder des forets de diamètre adapté, mais aussi des fraises à chambrer ou à lamer comportant, pour un diamètre de corps égal, des pilotes de diamètres différents. Cela augmente le coût de l'outillage et renchérit l'usinage.

On connait par ailleurs des outils à chambrer réalisant en même temps, d'une part, l'avant trou de perçage pour le foret réalisant l'alésage pour la vis, et d'autre part, le chambrage pour la tête de vis. Toutefois de tels outils, utilisant une lame transversale fixée dans un logement de la fraise, sont onéreux puisque réalisés en deux parties et sont fragiles en raison de la présence d'une lame pouvant se rompre sous un effort mal apprécié, et voire même déformer son logement.

La présente invention vise à remédier aux inconvénients ci-dessus fournissant un outil d'usinage, robuste et peu onéreux, permettant de réduire le temps d'usinage et l'outillage nécessaire à la réalisation d'un logement pour tête de vis.

Cet outil, du type comportant deux, trois ou quatre goujures en hélice délimitant des lèvres ayant chacune une arête de coupe hélicoïdale allant de sa pointe à son corps, est muni, coaxialement à son axe de rotation et à partir de sa pointe, d'au moins un cône à 118 ° avec arêtes de coupe, suivi par une partie tronconique également avec arêtes de coupe, ayant un angle au sommet de valeur comprise entre 60 et 90 °, cette partie tronconique étant elle-même prolongée par une partie cylindrique de plus grande diamètre qu'elle et comportant des arêtes de coupe au moins dans sa face en bout.

Avec cet outil, en même temps que la pointe conique réalise le cône de centrage pour l'opération suivante, la partie tronconique réalise un chanfrein de 60 ou 90 ° et la face en bout réalise un lamage d'appui.

Dans une forme d'exécution, pour l'usinage de logements de tête de vis cylindrique, la partie cylindrique de plus grand diamètre comporte également des arêtes de coupe longitudinales.

Avantageusement, la partie cylindrique tranchante est prolongée par une partie tronconique, se raccordant au corps cylindrique de l'outil et présentant des arêtes de coupe.

Cette partie tronconique permet de réaliser le chanfrein d'entrée du logement, en même temps que ce logement, et supprime donc toute opération de reprise.

L'invention sera mieux comprise à l'aide de la description qui suit en référence au dessin schématique annexé représentant à titre d'exemples non limitatifs, quelques formes d'exécution de cet outil.

Figures 1 à 3 sont des vues partielles représentant, de côté en élévation, l'extrémité inférieure d'un outil respectivement de centrage et de chambrage pour vis à tête cylindrique, de centrage et de chambrage pour vis à tête cylindrique avec ménagement d'un chanfrein et enfin de centrage, chanfreinage et lamage pour une vis à tête plate.

Figures 4 à 6 sont des vues partielles en coupe transversale représentant les usinages réalisés par les outils des figures 1 à 3,

Figures 7 à 9 sont des vues partielles en coupe transversale représentant les usinages obtenus après perçage des usinages réalisés aux figures 4 à 6.

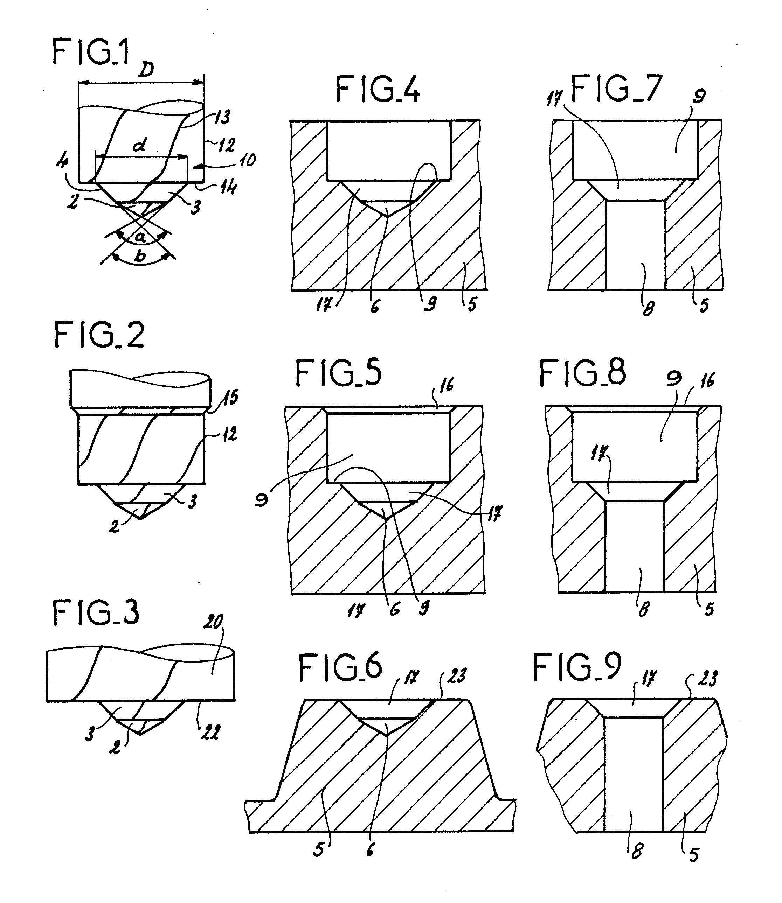

Tous les outils représentés aux figures 1 à 3 sont constitués par un foret ou une fraise comportant au moins deux goujures en hélice, et de préférence trois, et délimitant des lèvres 1 avec arête de coupe hélicoïdale.

Selon l'invention, chacun de ces outils comporte au moins dans sa partie tranchante et de sa pointe à son corps, au moins un cône de centrage 2 ayant un angle au sommet (a) de 118 °. Cette partie conique est suivie par une partie tronconique 3, également tranchante, c'est à dire munie d'arêtes de coupe 4 et présentant un angle au sommet (b) ayant une valeur de 90 ° ou de 60 °. Dans les formes d'exécution représentées, la partie tronconique 3 a un angle (b) de 90 °.

En complément de la pointe de centrale tranchante 2 et de la partie tronconique tranchante 3, chaque outil comprend, dans le prolongement de ces deux parties et en direction du corps d'outil, une partie cylindrique 12 dont le diamètre D est supérieur au plus grand diamètre d de la partie tronconique sous-jacent.

Dans l'outil 10 représenté à la figure 1, et destiné à réaliser simultanément le centrage, le chambrage pour une tête de vis cylindrique et le chanfreinage entre le logement de tête et le trou pour la tige, la partie 12 est munie d'arêtes de coupe longitudinales 13 et d'arêtes de coupe 14, parallèles au plan diamétral de sa base.

Lorsqu' un tel outil est utilisé, comme montré à la figure 4, il permet de réaliser, en une seule opération, le cône de centrage 6, une portée tronconique 17 et, un chambrage 9 pour la tête de la vis. Pour terminer le logement pour la vis, il suffit de percer le trou 8 pour le passage de la tige de la vis avec un foret dont le diamètre est adapté au diamètre voulu pour ce logement, en fonction de la qualité de l'assemblage recherché. La réalisation du trou 8 est d'autant plus aisée que la pointe du foret est positionnée par le cône de centrage 6 et que la hauteur à percer est réduite.

L'outil représenté à la figure 2 se différencie de celui montré à la figure 1 par le fait qu'il comporte, en plus et après la partie cylindrique 12, une partie tronconique tranchante 15 prolongeant cette partie 12. Cette partie tronconique 15 permet, comme montré à la figure 7, de réaliser en même temps que le chambrage 9 un chanfrein d'entrée 16. Ainsi, en une seule opération, l'opérateur réalise toutes les opérations concernant la réalisation du chambrage pour la tête de vis, sans que cela augmente le temps d'usinage. Après réalisation du perçage 8, l'ensemble du logement obtenu présente la forme représentée à la figure 8.

Dans une variante, et lorsque le chanfrein 16 est remplacé par un arrondi, la partie tronconique 15 présente des génératrices concaves, en arc de cercle.

L'outil représenté à la figure 3 comporte également la pointe de centrage 2, et la portée tronconique 3, mais cette dernière est solidaire d'une partie cylindrique 20 de beaucoup plus grand diamètre qu'elle et constituée par une fraise en bout, c'est à dire comportant des arêtes tranchantes uniquement au niveau de sa face en bout 22. Un tel outil est plus particulièrement destiné à effectuer des lamages, sur des pièces brutes de fonderie, d'estampage ou de mécano-soudure, pour appui de vis à tête plate.

Lorsque cet outil est utilisé, et comme montré à la figure 6, il permet de réaliser simultanément le cône de centrage 6, une portée tronconique 17 et une face d'appui 23 parfaitement orthogonale à l'axe longitudinal du cône et de la portée. Pour terminer l'usinage, il suffit de réaliser le perçage 8 pour le passage de la tige de vis au moyen d'un foret dont le diamètre est adapté, ce diamètre pouvant varier sur une plage importante, pourvu qu'il reste, à l'extrémité du trou 8 ainsi obtenu, un chanfrein d'entrée correspondant à la portée tronconique 17 précédemment réalisée. Un tel outil permet de gagner du temps et de simplifier considérablement l'usinage sur des pièces brutes offrant en général des surfaces rendant mal aisé tout perçage.

Les trois outils qui viennent d'être décrits permettent, par leur structure et par leur mode d'utilisation, de supprimer tout recours à des fraises à chambrer ou à lamer pour réaliser des logements pour têtes de vis cylindriques, hexagonales ou coniques, et suppriment donc tous les inconvénients liés à la sélection du diamètre des pilotes centrant ces fraises dans des alésages déjà réalisés. Par ailleurs, de par leur structure, ils réduisent le nombre d'opérations et permettent donc de réduire le coût d'usinage des logements ou des faces d'appui pour têtes de vis. De plus, grâce à leur réalisation monolithique, ils sont très résistants.

**Revendications**

1. Outil pour l'usinage de logements de tête de vis du type comportant, au moins deux goujures en hélice délimitant des lèvres avec arêtes de coupe hélicoïdales allant de sa pointe à son corps, caractérisé en ce qu'il est muni, coaxialement à son axe de rotation et à partir de sa pointe, d'au moins un cône 2 avec arêtes de coupe formant un angle de 118 °, suivi par une partie tronconique 3, avec arêtes de coupe ayant un angle au sommet de valeur comprise entre 60 et 90 °, elle-même prolongée par une portée cylindrique 12, de plus grand diamètre qu'elle, comportant des arêtes de coupe au moins dans sa face en bout 14.

2. Outil selon la revendication 1, caractérisé en ce que la portée cylindrique 12 est aussi munie d'arêtes de coupe longitudinales 13.

3. Outil selon l'ensemble des revendications 1 et 2, caractérisé en ce que la portée cylindrique est prolongée par une partie tronconique 15 se raccordant au corps cylindrique de l'outil et présentant des arêtes de coupe.

4. Outil selon la revendication 3, caractérisé en ce que les génératrices de la partie tronconique 15 sont concaves et en arc de cercle.

FIG.1

FIG.4

FIG.7

FIG.2

FIG.5

FIG.8

FIG.3

FIG.6

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | TOOLING & PRODUCTION, vol. 52, no. 1, avril 1986, page 138, Hueber Publ. Inc., Solon, Ohio, US; "Hole locating and countersinking tool" * Résumé * --- | 1 | B 23 B 51/10 |
| Y | FR-A-2 218 961 (CAROSSINO) * Page 3, lignes 16-40; page 4, lignes 1-7; figure 1 * | 1 | |
| A | | 2-4 | |
| A | US-A-1 643 679 (RODERICK) * Figure 1; référence 22 * --- | 4 | |
| A | US-A-2 705 515 (WALKER) ----- | 4 | |

|  |  |  | DOMAINES TECHNIQUES RECHERCHES (Int. Cl.5) |
|---|---|---|---|
| | | | B 23 B 51/00 B 23 B 35/00 |

Le présent rapport a été établi pour toutes les revendications

| Lieu de la recherche | Date d'achèvement de la recherche | Examinateur |
|---|---|---|
| LA HAYE | 04-12-1989 | BOGAERT F.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EP C FORM 1503 03.82 (P0402)